# EUROPEAN PATENT SPECIFICATION

(11) **EP 0 481 265 B1**
(45) Date of publication and mention of the grant of the patent: **23.10.1996**
(21) Application number: 91116452.3
(22) Date of filing: 26.09.1991
(51) Int. Cl.: G03D 13/00, G03B 27/32, G03D 9/00

(54) **Delamination medium, apparatus and method**
Verfahren und Vorrichtung zur Filmschichttrennung
Méthode et dispositif pour séparer des couches de film

(30) Priority: 21.11.1990 US 616796; 19.10.1990 US 599714
(43) Date of publication of application: 22.04.1992
(73) Proprietor: POLAROID CORPORATION, Cambridge, Massachusetts 02139 (US)
(72) Inventor: Tobin, William Patrick, Salem, NH 03079 (US)
(74) Representative: Koch, Günther, Dipl.-Ing.

(56) References cited:
- WO-A-88/04237
- CH-A- 436 986
- CH-A- 445 296
- DE-A- 2 634 413
- US-A- 3 936 343
- US-A- 4 183 751

## Description

### Field of the Invention

The invention, in general, relates to a novel delamination apparatus and method, and to a laminate for use therewith, and, in particular, to an apparatus and a method of processing a thermal imaging medium, as well as to a novel laminar imaging material.

### The State of the Art

The prior art is replete with apparatus and methods for separating layers of laminar film units, for instance, for the purpose of rendering a developed image visible. Such apparatus and methods are most commonly used in connection with so-called peel-apart film units and may utilize a blade of some kind insertable between two predetermined layers or sheets of a film unit fixed to the periphery of a rotating drum; vide, for instance, US-A-4,670,085.

In general, the prior art apparatus and methods may be characterized as providing a peeling action, i.e. removal of one layer from another. They would not, however, be suited for providing delamination as understood in the context of the present invention. Delamination, in the sense used herein, is to be understood as meaning a process of separating cover or support sheets from opposite surfaces of a vertically frangible layer each carrying different portions of the frangible layer with it as determined by the strength of an adhesive bond at any given point between the surfaces of the layer and the respective sheet. Vertical frangibility of the layer as used herein is intended to mean the ability of the layer to break in a direction normal to its surfaces but to exclude breaking of the layer between its surfaces.

DE-A-26 34 413 discloses a method for peeling off a flexible foil. The foil is fixed to the surface of a drum by inner vacuum of this drum.

US-A-3 936 343 discloses a pressure-sensitive tape attached to and extending beyond the front edge of a stiff card which tape is removed by grasping the extending end in jaws of a wind-up roller. Rotating the roller winds the tape thereon, facing outward. Upon completion of winding, the roller is stopped, the clamp jaws released, and the wrap of tape is thrust off the end of the cantilevered roller.

It is an object of the invention to provide a novel apparatus for delaminating a composite sheet structure comprising a plurality of selectively releasable superposed sheets, in such a manner that predetermined portions of a frangible layer interposed between, and releasably connected to, two sheets remain on one of the sheets with complementarily adjoining portions of the layer remaining on the other sheet.

Yet a further object is to provide a novel delamination method which makes possible the selective removal of portions of a frangible layer by sheets adhered to opposite surfaces of the layer.

The above object is achieved by the combined features of claim 1 as far as the apparatus is concerned and by the combined features of claim 11 as far as the method is concerned.

Therefore the invention provides an apparatus for delamination of the kind referred to, in which the separation of a sheet from the layer may entail the removal of as small a portion of the layer as 1µ or less diameter, wherein the separation of a sheet from the layer may entail the removal of all but a portion of the layer measuring as little as 1µ or less in diameter.

The inventive apparatus is adapted for processing a thermographic film unit by separating two sheets enclosing between them a layer of an image forming substance, to remove predetermined portions from the layer thereby to form two complementary images.

The invention further resides in the provision of a thermal imaging film unit as defined by claim 6 which by the apparatus and method of this invention may provide images of an extremely fine resolution and superior optical density.

Therefore the invention provides for an apparatus for delaminating a composite sheet structure comprising a frangible layer having a first surface adhesively bonded to a first sheet at a substantially uniform strength and an opposite surface abutting surface areas of which are, respectively, adhesively bonded to a second sheet at strengths greater and less than the uniform strength and having a marginal portion attached to one and extending beyond the other of the first and second sheets, the apparatus comprising first roller means having an axially extending slot in its peripheral surface, second roller means positioned in parallel to the slot, means for inserting the marginal portion into the slot, and means for rotating the first roller in a direction winding the one sheet on the first roller and moving the other sheet away from the first and second rollers.

The laminate in accordance with the invention comprises first and second flexible sheets attached to opposite surfaces of a frangible layer, one of the sheets having a marginal portion extending beyond an adjacent margin of the other sheet.

### Brief Description of the Drawings

Preferred embodiments of the invention will hereinafter be described with reference to the drawings in which:
FIG. 1 is a perspective view of a preferred embodiment of the laminate in accordance with the invention;
FIG. 2 is a view, in longitudinal section, of the laminate of FIG. 1 depicting certain aspects of its delamination characteristics with the thicknesses of its several sheets being exaggerated for clarity;
FIG. 3 is a longitudinal section through the apparatus in accordance with the invention illustrating delamination of a laminate in an early stage;

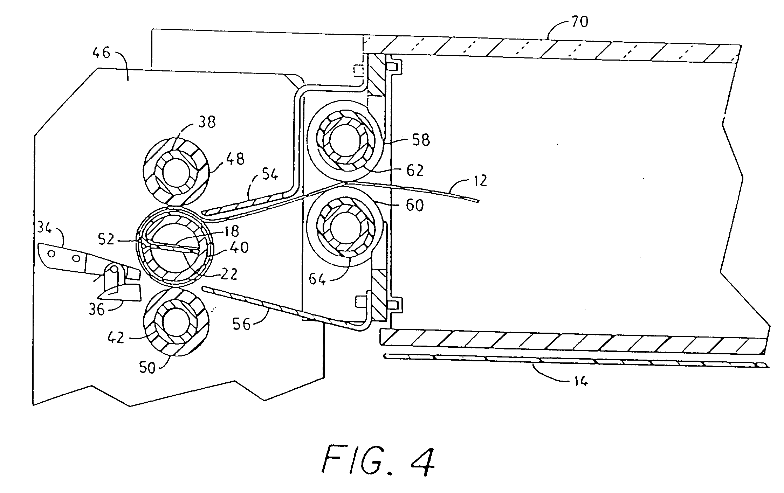

FIG. 4 is a longitudinal section similar to FIG. 3 but depicting the condition of the apparatus in an initial stage of feeding a disposable sheet of the laminate into a receptacle following the delamination;

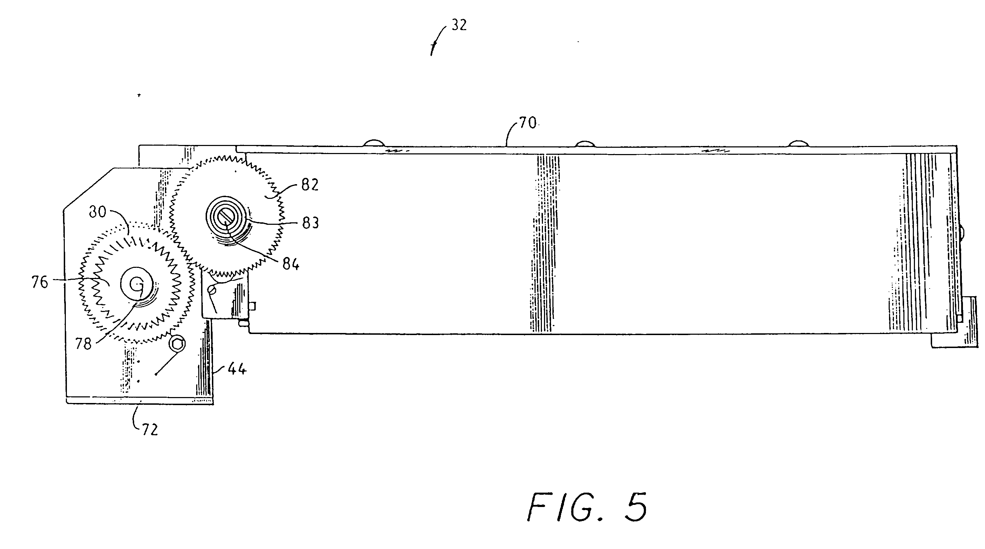

FIG. 5 is a side elevational view of the delamination apparatus of the invention;
FIG. 6 is a sectional view, with parts broken away for clarity, along line V-V and on an enlarged scale, of the apparatus of Fig. 5; and

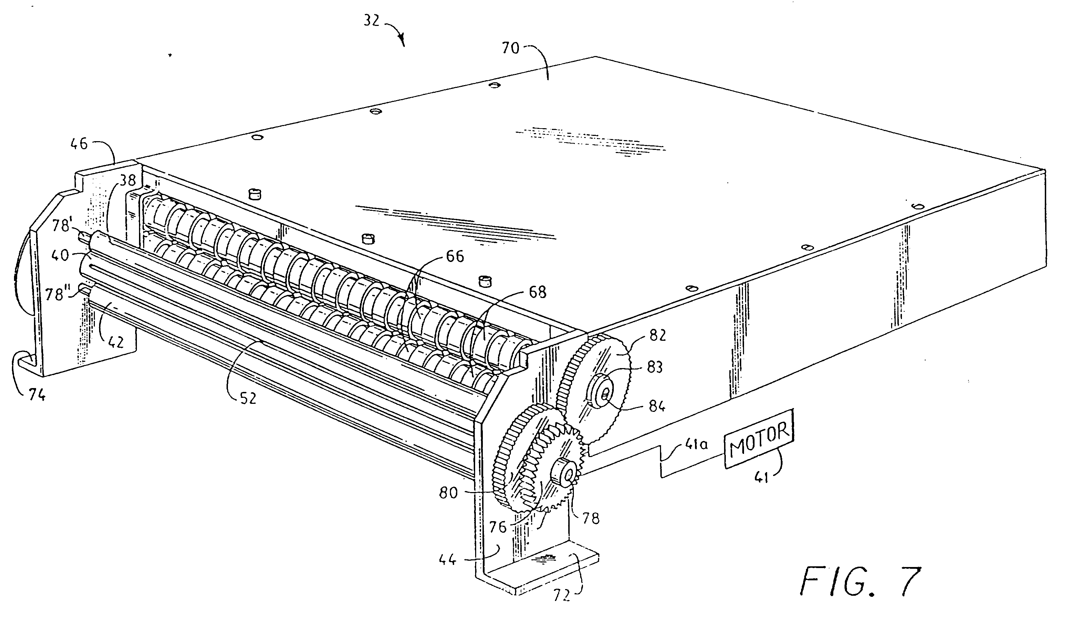

FIG. 7 is a perspective view on a reduced scale of the apparatus of Fig. 5.

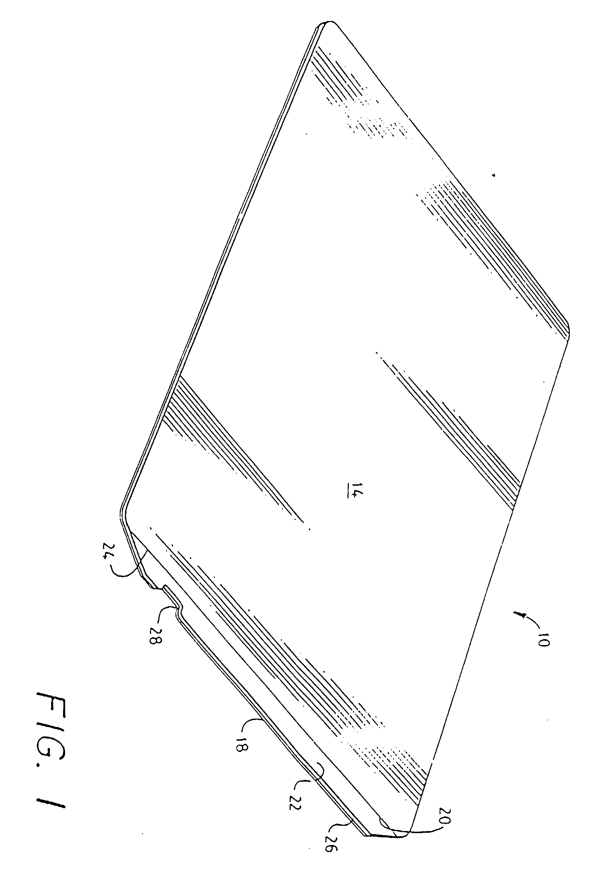

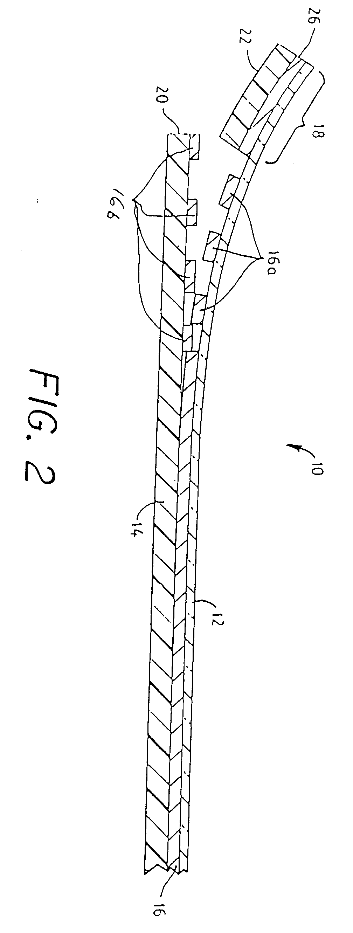

A laminate 10, shown in FIG. 1 and 2 in its preferred embodiment as a thermal imaging film unit of the general kind disclosed by International Application PCT/US 87/03249, may consist of first and second support sheets 12 and 14 being respectively adhesively connected to opposite surfaces of a frangible layer 16. In a film unit the frangible layer 16 may be a coating of an image forming substance. In its initial unexposed state the laminate 10 is such that the adhesive bond between the layer 16 and the sheet 12 is weaker than the bond between the layer 16 and the sheet 14. The frangible layer 16 may itself be a composite of several layers conducive to forming an image of desirably high resolution and optical density as a result of thermal exposure and subsequent processing, including delamination as provided by the instant invention.

For purposes of the present invention it is sufficient to note that the layer 16 is such that it serves as a heat shield and that it may be ruptured in a direction normal to its two surfaces along lines defined by a thermally exposed image such as described in the International Application, *supra*. In general, as a result of the exposure the bond between those portions of the frangible layer 16 and the sheet 12 becomes stronger than the bond existing *ab initio* between the portions of the layer 16 and the sheet 14 which were not exposed to heat.

The exposure may be carried out by a laser scanning technique, and while in the embodiment depicted, the exposure preferably takes place through the thinner sheet 12, it will be understood by those skilled in the art that exposure may instead be carried out through the thicker sheet 14. Such an exposure would, of course, require a bond strength between the sheet 12 and the layer 16 stronger than the initial bond between the sheet 14 and the layer 16. Furthermore, it would also be possible instead of strengthening the adhesive bond by the application of heat to weaken it.

In the event, it is advantageous to prevent the heat from penetrating through the layer 16 in order to leave the bond between the opposite sheet and the layer substantially unaffected. This may be accomplished by heat shielding properties of the layer 16 derived, for instance, from carbon particles or a heat absorbing dye, such as an IR-absorbing dye.

As a result of the heat-treatment the portions 16a of layer 16 will become more firmly bonded to sheet 12. The portions 16a and the portions 16b on sheet 14 which have not been affected by heat may then be separated from each other when the sheets 12 and 14 are delaminated in the manner of this invention.

The sheets 12 and 14 may be made of the same or of different material, polyethylene terephthalate, polystyrene, polyethylene, polypropylene, copolymers of styrene and acrylonitrile, polyvinyl chloride, polycarbonate and vinylidene chloride being some but not all of the materials suited as support sheets. They may themselves be laminar structures provided with a backing of paper (not shown) or any other material suited for any specific purpose. While it is not a requirement, it has been found to be advantageous to have one of the sheets limper, i.e., more flexible than the other. The difference in limpness may be provided by a difference in the materials of which the sheets 12 and 14 are made. Preferably, however, and as shown, the different limpnesses are attained by one of the sheets 12 being thinner than the other sheet 14.

For purposes to be described, the sheet 12 is provided with a marginal portion 18 extending beyond an adjacent margin 20 of the sheet 14. As a matter of efficient manufacture and as shown, the marginal portion 18 may, but need not, be provided by a similar portion 22 of the sheet 14 severed from it by a score or cut line 24 along its margin 20.

In a common free edge 26 of the marginal portions 18 and 22 and the intermediate layer 16 there is provided a notch 28 which may conveniently serve as an alignment means for correctly placing the laminar film unit 10, or a plurality thereof, in a cassette (not shown) provided with a complementary protrusion in an orientation to ensure that the sheet 12 is facing upwardly for proper placement within the apparatus of this invention.

The length of the laminate film unit 10 measured between the score line 24 and a rear edge may typically be about 25.5 cm (10 in.), its width may be about 20 cm (8 in.), and the dimension of the marginal portion 18 between its forward edge 26 and the score line 24 may be about 6.5 mm (.25 in.). The thicknesses of the sheets 12 and 14 measure, respectively, about 0.013 to 0.178 mm (0.5 to 7 mil) and 0.038 to 0.254 mm (1.5 to 10 mil), good results having been obtained with sheets of thicknesses of 0.038 and 0.178 (1.5 and 7 mil), respectively. Other dimensions may, of course, be substituted. Preferably, the corners of the sheets 12 and 14 are rounded.

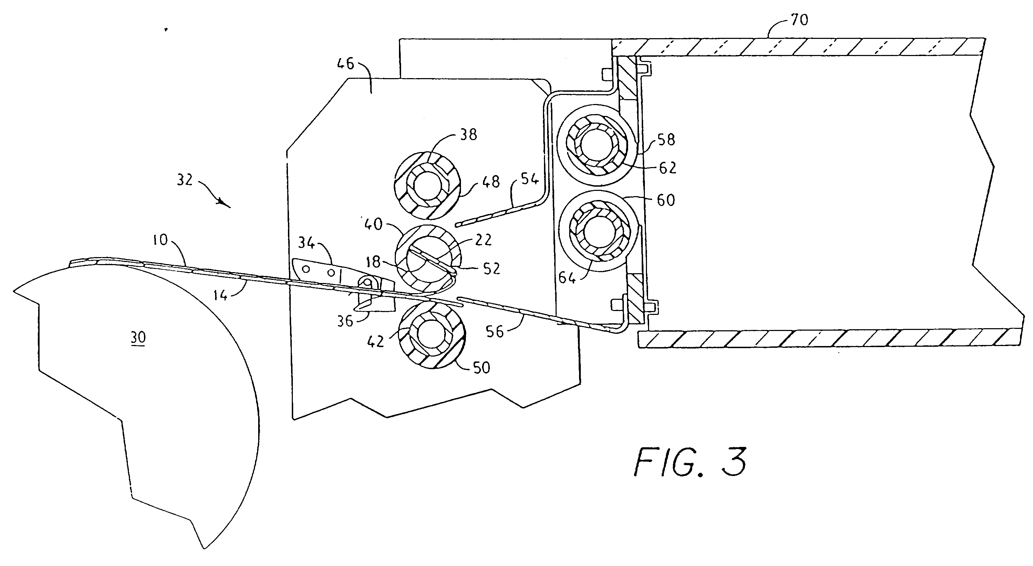

Fig. 3 discloses the film unit as it leaves a printing drum 30 upon which it was wrapped and retained, by its opposite ends, by a pair of clamps (not shown) axially extending and recessed in the periphery of the drum 30. The film unit 10 is shown as entering the delamination apparatus 32 of the present invention through a pair of horizontal parallel guides 34, 36.

The delamination apparatus 32 comprises a set of three rollers 38, 40, 42 made of a material, such as stainless steel, rotatably suspended in parallel relationship on axial stubs 78, 78', 78'' by a pair of flanges 44, 46. The flanges 44, 46 extend from the forward end of a receptacle 70 and are provided, at their lower ends, with laterally extending feet 72, 74 upon which the apparatus 32 may rest.

The length of the rollers 38, 40, 42 corresponds to, or is slightly longer than, the width of the laminar film unit 10, i.e. 20 cm. In a manner not shown, the rollers 38, 40, 42 may be biased against each other by suitable springs, and preferably there is a slight clearance between their peripheries for purposes which will become apparent hereinafter. The roller 40 may be rotated by a bidirectional drive motor 41 connected to a pinion 76 by a transmission schematically indicated by line 41a. The rollers 38, 42 may at times be driven by the roller 40, as will be explained *infra*. The rollers 38 and 42 may be coated with a high friction material such as rubber or the like, as indicated by reference characters 48, 50. The roller 40 may be hollow and is provided in its periphery with a slot 52 extending axially along the periphery of the roller 40, its length being no less than the width of the laminate 10. The slot 52 may taper toward the interior of the roller 40, and for reasons to be explained *infra* the total depth of the slot 52 is more or less equal to the length of the marginal portion 18 of the film unit 10.

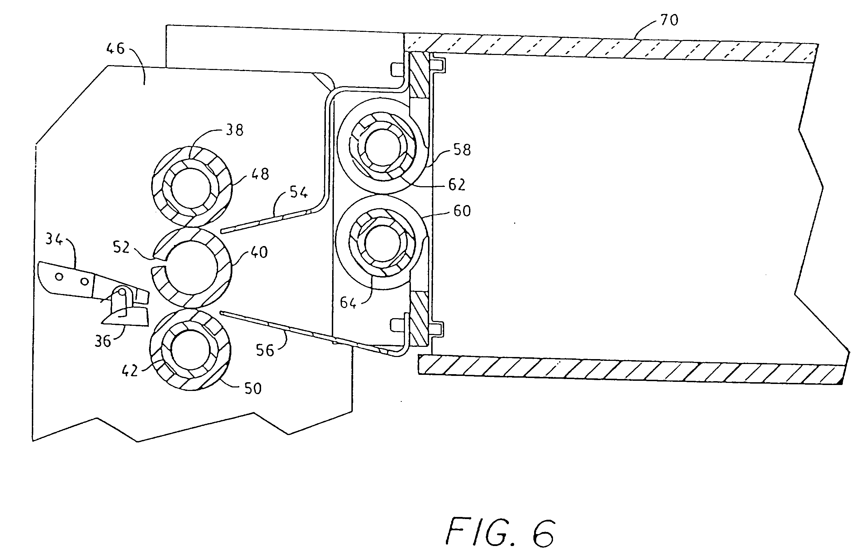

To the right of the rollers 38, 40, and 42 (Fig. 6) two ramps or guides 54, 56 extend from the receptacle 70 and serve to deflect the sheets 12, 14 of the film unit 10 as will be described. To the right of the ramps 54, 56 and at the entrance to the receptacle 70 there is provided a pair of rollers 58, 60 of substantially the same axial dimensions as, and positioned in parallel relationship to, the rollers 38, 40, 42. Like the latter, the rollers 58, 60 are rotatably mounted on the flanges 44, 46 by axial stubs 84 (only one shown). On their peripheries, the rollers 58, 60 are coated 62, 64 with high friction material, such as rubber. The coatings 62, 64 are shaped to form a plurality of alternating annular grooves 66 and elevations 68, opposing elevations 68 on the rollers 58, 60 being in frictional contact with each other.

As stated above, the roller 40 is driven by a motor 41. Motion of the motor 41 is bidirectional and may be transmitted to the roller 40 by a pinion 76 coaxially keyed to an axial stub 78 of the roller 40. Also mounted on the stub 78 is a further pinion 80 which is in meshing engagement with a similar pinion 82 mounted on the axial stub 84 of the roller 58. For reasons to become apparent hereinafter, a one-way clutch 83 permits driving of the roller 58 in a counterclockwise direction only.

The receptacle 70 is of substantially parallelepiped configuration and placed to the right of the rollers 58, 60. It is accessibly through an opening spanning the length of the rollers 58, 60 and aligned with the nip or gap formed between them. The receptacle 70 may be provided with a latchable door (not shown) so that it may be periodically emptied.

The apparatus 32 functions in the following manner:

As the laminar sheet 10 is released from the printing drum 30 and fed through the guides 34 and 36 in a manner immaterial to the instant invention, its marginal portion 18, with the score line 24 facing downwardly, is inserted into the slot 52 of the roller 40. Since, as described *supra*, the depth of the slot 52 is substantially equal to the length of the marginal portion 18 of the laminate 10, the score line 24 of the laminate 10 will be positioned at the intersection of the slot 52 and the outer surface of the roller 40.

The roller 40 is then driven in a counterclockwise direction and begins pulling the laminate 10 to the right into the nip or gap formed between the rollers 40 and 42. The roller 58 does not move at this time because of the one-way clutch between its pinion 82 and the pinion 80 of the roller 40. As soon as the score line 24 has passed the nip formed between the rollers 40 and 42, or very shortly thereafter, the support sheet 14, because of its greater stiffness, begins to separate from the layer 16 along a line extending substantially parallel to the nip of the rollers 40, 42 in all those points of adhesive connection which as a result of the thermal exposure of the laminate 10 are weaker than the points of connection between the portions 16a of the layer 16 and the more flexible support sheet 12. As the roller 40 continuous to rotate in the counterclockwise direction the more flexible support sheet 12 is wound or coiled upon the roller 40 and carries with it all those portions 16a of the frangible layer 16 which as a result of the thermal exposure have been firmly bonded to it. Owing to the bias of the rollers 38, 40, 42 toward each other, or the space between them, as the case may be, the sheet 12 becomes tightly coiled around the roller 40, the rollers 38 and 42 being driven by their frictional engagement with the roller 40 or the increasing convolutions of the sheet 12 thereon, as the case may be. At the same time, the stiffer sheet 14 is moving in a substantially straight downwardly directed path, beneath the ramp 56, to a space (not shown) provided below the receptacle 70.

Once the entire sheet 12 has been coiled upon the roller 40, the stiffer sheet 14 with the image forming portions of the layer 16 will have completely separated from the sheet 12 and from those portions 16a of the layer 16 forming thereon a complementary but disposable image.

At this time the rotation of the roller 40 is reversed into a clockwise direction, and because of the one-way clutch 83 the roller 58 is rotated in a counterclockwise direction which, in turn, causes the roller 60 to rotate in a clockwise direction. The sheet 12 begins to unwind from the roller 40 and its leading end is caught in the nip between the rollers 58, 60. Accordingly, as the sheet 12 continues to unwind from the roller 40 it is being fed through the gap between the rollers 58 and 60 into the receptacle 86 for disposal. Once the sheet 12 has been totally delivered into the receptacle 86 rotation of all rollers ceases, preferably when the slot 52 has moved into its initial position for receiving a next laminar sheet. Means such as flexible fingers (not shown) may be provided at the entrance of the receptacle 70, behind the rollers 58, 60 to prevent the sheet 12 from escaping through the entrance once it has been delivered into the receptacle 70.

For the sake of clarity circuitry and sensors, such as mechanical or photocell switches, for controlling the proper interplay between the movement of the various rollers of the delamination apparatus 32 and the laminate 10 from the moment it leaves the printing drum 30 till the sheet 12 has been taken up by the receptacle 70 have not been shown or described as they are well-known and their functions are self-evident.

As will be apparent to those skilled in the art the embodiments herein described may be modified or changed without departing from or encroaching upon the scope of the invention. All embodiments disclosed are merely illustrative and are in no way exhaustive of the scope of invention.

## Claims

1. An apparatus for delaminating a composite sheet structure (10) of the kind comprising a vertically frangible layer (16) having a first surface adhesively bonded to a first sheet (14) at a substantially uniform strength and an opposite surface abutting areas of which are, respectively, adhesively bonded to a second sheet (12) at strengths less or greater than the uniform strength and having a marginal portion (18) extending beyond the first sheet (14) comprising:
first (40) and second (42) rollers positioned in parallel and forming a nip therebetween for passage of said composite sheet structure (10) therethrough, said first roller (40) having an axially extending slot (52) in its peripheral surface;
means (34, 36) for inserting the marginal portion (18) into said slot (52); and
bidirectionally movable drive means (41) for rotating the first roller (40) in a first direction for winding the second sheet (12) on the first roller (40) and for removing the second sheet (12) with those areas of the frangible layer bonded to it at a strength greater than the uniform strength from said first sheet (14) and for rotating said first roller (40) in a second opposite direction for unwinding said second sheet (12) from said first roller (40);
third (58) and fourth (60) rollers positioned in parallel and forming a nip therebetween, said third roller (58) being adapted, in response to said drive means (41) for rotating said first roller (40), to rotation during the unwinding of said second sheet (12) from said first roller (40), said rotation of said third roller (58) being in a direction opposite from the direction of rotation of said first roller (40) during said unwinding and being effective to capture the unwound end (18) of said second sheet (12) between the nip of said third (58) and fourth (60) rollers as said sheet (12) unwinds from said first roller (40) and to pass said sheet (12) therethrough in a direction away from said first (40) and second (42) rollers.

2. The apparatus of claim 1, wherein the depth of the slot (52) substantially equals the length of the marginal portion (18).

3. The apparatus of claim 1, wherein one (58) of the third and fourth rollers is connected with the drive means (41) by a one-way clutch (83).

4. The apparatus of claim 1, wherein means (70) is provided for receiving the second sheet (12) from the third (58) and fourth (60) rollers.

5. The apparatus of claim 1, further comprising a fifth roller (38) positioned parallel to the slot opposite the second roller (42) relative to the first roller (40).

6. A composite laminar structure (10), comprising:
a frangible layer (16) of substantially uniform thickness;
a first sheet (14) of a first resiliency adhesively bonded at a predetermined strength to one surface of the layer (16);
a second sheet (12) of a second resiliency adhesively bonded to abutting areas of the opposite surface of the layer (16) at strengths less or greater than the predetermined strength; and
a marginal portion (18) integral with the second sheet (12) and extending beyond an adjacent edge (20) of the first sheet (14).

7. The laminar structure of claim 6, wherein the marginal portion (18) is provided with alignment means (28).

8. The laminar structure of claim 7, wherein the alignment means comprises a recess (28) in an edge (26) on the marginal portion (18).

9. The laminar structure of claims 6 through 8, wherein the first (14) and the second (12) sheets are congruent and the marginal portion (18) is formed by a score line (20) severing a marginal portion (18) of the first sheet (14) from the remainder thereof.

10. The laminar structure of claim 6, wherein the first resiliency is greater than the second resiliency.

11. A method of delaminating a composite laminar structure (10) comprising a frangible layer (16) having a first surface adhesively bonded to a first sheet (14) at a substantially uniform strength and abutting areas of an opposite surface attached to a second sheet (12) at strengths less or greater than the uniform strength, and having a marginal portion (18) extending beyond the first sheet (14) comprising the steps of:
passing said composite laminar structure (10) into a nip formed by first (40) and second (42) rollers, said first roller (40) having an axially extending slot (52) in its peripheral surface;
inserting said marginal portion (18) into said slot (52);
rotating said first roller (40) in a first direction for winding said second sheet (12) onto said first roller (40), said second sheet (12) carrying with it portions of the layer adhering to it at a strength greater than said uniform strength;
moving said composite laminar structure (10) through said nip and separating said first sheet (14) from said second sheet (12) as said second sheet (12) is wound onto said first roller (40), said first sheet (14) carrying with it portions of the layer adhering to it at said uniform strength;
rotating said first roller (40) in a second direction to unwind said second sheet (12) from said first roller (40);
capturing the unwound end (18) of said second sheet (12) into a nip formed by third (58) and fourth (60) rollers positioned substantially in parallel with said first (40) and second (42) rollers, said third roller (58) being adapted to rotation upon rotating said first roller (40) in said second direction, said rotation of said third roller (58) being in a direction opposed from said second direction; and
passing said second sheet through said nip between said third (58) and fourth (60) rollers.

12. The method of claim 11 wherein said second sheet (12) is more flexible than said first sheet (14).

## Patentansprüche

1. Vorrichtung zur Schichttrennung eines zusammengesetzten Blattaufbaus (10), der eine vertikal aufbrechbare Schicht (16) besitzt, die mit einer ersten Oberfläche durch Adhäsion an einem ersten Blatt (14) mit einer im wesentlichen gleichförmigen Festigkeit anhaftet, während gegenüberliegende Oberflächenbereiche jeweils durch Adhäsion mit einem zweiten Blatt (12) mit einer Festigkeit anhaften, die kleiner oder größer ist als die gleichförmige Festigkeit, wobei ein Randabschnitt (18) sich über das erste Blatt (14) heraus erstreckt, und wobei die Vorrichtung die folgenden Merkmale aufweist:
- eine erste Walze (40) und eine zweite Walze (42) sind parallel zueinander angeordnet und bilden dazwischen einen Quetschspalt zum Durchtritt des zusammengesetzten Blattaufbaus (10), wobei die erste Walze (40) einen axial verlaufenden Schlitz (52) in ihrer Umfangsoberfläche aufweist;
- Mittel (34, 36) zum Einfügen des Randbereichs (18) in den Schlitz (52); und
- ein in beiden Richtungen beweglicher Antrieb (41) zur Drehung der ersten Walze (40) in einer ersten Richtung zur Aufwicklung des zweiten Blattes (12) auf der ersten Walze (40) und zur Trennung des zweiten Blattes (12) mit jenen Bereichen der aufbrechbaren Schicht, die mit einer Festigkeit anhaften, die größer ist als die gleichförmige Festigkeit, von dem ersten Blatt (14) und zur Drehung der ersten Walze (40) in einer zweiten, entgegengesetzten Richtung zum Abwickeln des zweiten Blattes (12) von der ersten Walze (40);
- dritte (58) und vierte (60) Walzen sind parallel zueinander angeordnet und bilden dazwischen einen Quetschspalt, wobei die dritte Walze (58) gemäß dem Antrieb (41) die erste Walze (40) dreht, während das zweite Blatt (12) von der ersten Walze (40) abgewickelt wird, und die Drehung der dritten Walze (58) in einer Richtung entgegen der Drehrichtung der ersten Walze (40) beim Abwickeln das nicht abgewickelte Ende (18) des zweiten Blattes (12) in den Spalt zwischen der dritten (58) und vierten (60) Walze einfängt, wenn das Blatt (12) sich von der ersten Walze (40) abwickelt und das Blatt (12) durch den Spalt in einer Richtung von der ersten (40) und der zweiten (42) Walze weg verläuft.

2. Vorrichtung nach Anspruch 1, bei welcher die Tiefe des Schlitzes (52) im wesentlichen gleich ist der Länge des Randabschnitts (18).

3. Vorrichtung nach Anspruch 1, bei welcher eine (58) der dritten bzw. vierten Walze an den Antrieb (41) über eine Einwegkupplung (83) verbunden ist.

4. Vorrichtung nach Anspruch 1, bei welcher Mittel (70) vorgesehen sind, um das zweite Blatt (12) von der dritten (58) und vierten (60) Walze aufzunehmen.

5. Vorrichtung nach Anspruch 1, welche außerdem eine fünfte Walze (38) aufweist, die parallel zum Schlitz gegenüber der zweiten Walze (42) relativ zu der ersten Walze (40) angeordnet ist.

6. Zusammengesetzter laminarer Aufbau (10) mit den folgenden Bestandteilen:
- eine aufbrechbare Schicht (16) von im wesentlichen gleichförmiger Dicke;
- ein erstes Blatt (14) mit einer ersten Biegsamkeit, das durch Adhäsion mit einer vorbestimmten Festigkeit an einer Oberfläche der Schicht (16) festgelegt ist;
- ein zweites Blatt (12) mit einer zweiten Biegsamkeit, das durch Adhäsion an den anliegenden Bereichen der gegenüberliegenden Fläche der Schicht (16) mit einer Festigkeit festgelegt ist, die kleiner oder größer ist als die vorbestimmte Festigkeit; und
- ein Randabschnitt (18) ist integral mit dem zweiten Blatt (12) verbunden und erstreckt sich über den benachbarten Rand (20) des ersten Blattes (14).

7. Laminarer Aufbau nach Anspruch 6, bei welchem der Randbereich (18) mit Ausrichtmitteln (28) versehen ist.

8. Laminarer Aufbau nach Anspruch 7, bei welchem die Ausrichtmittel aus einer Ausnehmung (28) in einem Rand (26) des Randabschnitts (18) bestehen.

9. Laminarer Aufbau nach den Ansprüchen 6 bis 8, bei welchem das erste Blatt (14) und das zweite Blatt (12) kongruent sind und der Randabschnitt (18) durch eine Kerblinie (20) gebildet ist, die den Randabschnitt (18) des ersten Blattes (14) von dem Rest des Blattes trennt.

10. Laminarer Aufbau nach Anspruch 6, bei welchem die erste Biegsamkeit größer ist als die zweite Biegsamkeit.

11. Verfahren zur Schichttrennung eines zusammengesetzten laminaren Aufbaus (10), der eine aufbrechbare Schicht (16) aufweist, die mit einer ersten Oberfläche durch Adhäsion an dem ersten Blatt (14) mit einer im wesentlichen gleichförmigen Festigkeit festgelegt ist, während angrenzende Bereiche einer gegenüberliegenden Oberfläche an einem zweiten Blatt (12) mit einer Festigkeit anhaften, die kleiner oder größer ist als die gleichförmige Festigkeit, wobei der laminare Aufbau (10) noch einen Randabschnitt (18) aufweist, der sich über das erste Blatt (14) hinaus erstreckt, mit den folgenden Schritten:
- der zusammengesetzte laminare Aufbau (10) wird in einen Spalt eingeleitet, der von einer ersten Walze (40) und einer zweiten Walze (42) gebildet ist, wobei die Walze (40) einen axial verlaufenden Schlitz (52) in ihrer Umfangsoberfläche aufweist;
- es wird der Randabschnitt (18) in den Schlitz (52) eingefügt;
- es wird die erste Walze (40) in einer ersten Richtung gedreht, um das zweite Blatt (12) auf der ersten Walze (40) aufzuwickeln, wobei das zweite Blatt (12) mit sich Abschnitte der Schicht führt, die daran mit einer Festigkeit anhaften, die größer ist als die gleichförmige Festigkeit;
- es wird der zusammengesetzte Schichtenaufbau (10) durch den Spalt geführt, und es wird das erste Blatt (14) von dem zweiten Blatt (12) getrennt, wenn das zweite Blatt (12) auf die erste Walze (40) aufgewickelt wird, wobei das erste Blatt (14) mit sich Abschnitte der Schicht führt, die mit der gleichförmigen Festigkeit anhaften;
- es wird die erste Walze (40) in einer zweiten Richtung gedreht, um das zweite Blatt (12) von der ersten Walze (40) abzuwickeln;
- es wird das nicht gewickelte Ende (18) des zweiten Blattes (12) in einen Spalt eingeführt, der von einer dritten Walze (58) und einer vierten Walze (60) gebildet ist, die im wesentlichen parallel zu der ersten Walze (40) und der zweiten Walze (42) gelagert sind, wobei die dritte Walze (58) mit der Drehung der ersten Walze (40) in der zweiten Richtung in Drehung versetzt wird und die Drehung der dritten Walze (58) in einer Richtung verläuft, die der zweiten Richtung entgegengesetzt ist; und
- es wird das zweite Blatt durch den Walzenspalt zwischen der dritten Walze (58) und der vierten Walze (60) hindurchgeführt.

12. Verfahren nach Anspruch 11, bei welchem das zweite Blatt (12) eine größere Biegsamkeit aufweist als das erste Blatt (14).

## Revendications

1. Appareil pour délaminer une structure de feuille composite (10) du type comprenant une couche (16) frangible verticalement et comportant une première surface liée par adhérence à une première feuille (14) avec une force d'adhérence sensiblement uniforme et une surface opposée dont des zones de contact sont, respectivement, liées par adhérence à une seconde feuille (12) avec des forces d'adhérence inférieure ou supérieure à la force d'adhérence uniforme et comportant une partie marginale (18) s'étendant au-delà de la première feuille (14), comprenant:
des premier (40) et deuxième (42) rouleaux disposés en parallèle et formant entre eux une ligne de pincement pour le passage à travers celle-ci de ladite structure de feuille composite (10), ledit premier rouleau (40) comportant dans sa surface périphérique une fente (52) s'étendant dans le sens axial;
des moyens (34, 36) servant à insérer la partie marginale (18) dans ladite fente (52); et
un moyen d'entraînement (41) mobile dans les deux sens, servant à faire tourner le premier rouleau (40) dans un premier sens pour enrouler la seconde feuille (12) sur le premier rouleau (40) et pour enlever de ladite première feuille (14) la seconde feuille (12) avec celles des zones de la couche frangible qui y adhèrent avec une force d'adhérence supérieure à la force d'adhérence uniforme, et à faire tourner ledit premier rouleau (40) dans un second sens opposé pour dérouler ladite seconde feuille (12) dudit premier rouleau (40);
des troisième (58) et quatrième (60) rouleaux disposés en parallèle et formant entre eux une ligne de pincement, ledit troisième rouleau (58) étant adapté pour effectuer, en réponse audit moyen d'entraînement (41) servant à faire tourner ledit premier rouleau (40), une rotation pendant que ladite seconde feuille (12) est déroulée dudit premier rouleau (40), ladite rotation dudit troisième rouleau (58) ayant lieu dans un sens opposé au sens de rotation dudit premier rouleau (40) pendant ledit déroulement et ayant pour effet de capturer l'extrémité déroulée (18) de la dite seconde feuille (12) entre la ligne de pincement desdits troisième (58) et quatrième (60) rouleaux au fur et à mesure que ladite feuille (12) est déroulée dudit premier rouleau (40) et de faire passer ladite feuille (12) à travers cette ligne de pincement dans une direction d'éloignement par rapport aux premier (40) et deuxième (42) rouleaux.

2. Appareil selon la revendication 1, dans lequel la profondeur de la fente (52) est sensiblement égale à la longueur de la partie marginale (18).

3. Appareil selon la revendication 1, dans lequel l'un (58) des troisième et quatrième rouleaux est couplé au moyen d'entraînement (41) par un embrayage unidirectionnel (83).

4. Appareil selon la revendication 1, dans lequel un moyen (70) est prévu pour recevoir la seconde feuille (12) arrivant des troisième (58) et quatrième (60) rouleaux.

5. Appareil selon la revendication 1, comprenant, en outre, un cinquième rouleau (38) disposé parallèlement à la fente en face du deuxième rouleau (42) par rapport au premier rouleau (40).

6. Structure stratifiée composite (10), comprenant:
une couche frangible (16) d'une épaisseur sensiblement uniforme;
une première feuille (14) présentant une première élasticité et liée par adhérence avec une force d'adhérence prédéterminée à une des faces de la couche (16);
une seconde feuille (12) présentant une seconde élasticité et liée par adhérence à des zones de contact de la face opposée de la couche (16) avec des forces d'adhérence inférieures ou supérieures à la force d'adhérence prédéterminée; et
une partie marginale (18) faisant corps avec la seconde feuille (12) et s'étendant au-delà d'un bord adjacent (20) de la première feuille (14).

7. Structure stratifiée selon la revendication 6, dans laquelle la partie marginale (18) est pourvue d'un moyen d'alignement (28).

8. Structure stratifiée selon la revendications 7, dans laquelle le moyen d'alignement comprend un évidement (28) dans un bord (26) de la partie marginale (18).

9. Structure stratifiée selon les revendications 6 à 8, dans laquelle les première (14) et seconde (12) feuilles sont superposables et la partie marginale (18) est formée par une ligne d'incision (20) séparant, de sa partie restante, la partie marginale (18) de la première feuille (14).

10. Structure stratifiée selon la revendication 6, dans laquelle la première élasticité est supérieure à la seconde élasticité.

11. Procédé pour délaminer une structure stratifiée composite (10) comprenant une couche frangible (16) comportant une première surface liée par adhérence à une première feuille (14) avec une force d'adhérence sensiblement uniforme et des zones de contact d'une surface opposée fixée à une seconde feuille (12) avec des forces d'adhérence inférieures ou supérieures à la force d'adhérence uniforme et comportant une partie marginale (18) s'étendant au-delà de la première feuille (14), comprenant les étapes consistant :
à faire passer ladite structure stratifiée composite (10) dans une ligne de pincement formée par des premier (40) et deuxième (42) rouleaux, ledit premier rouleau (40) comportant, dans sa surface périphérique, une fente (52) s'étendant dans le sens axial;
à insérer ladite partie marginale (18) dans ladite fente (52);
à faire tourner ledit premier rouleau (40) dans un premier sens pour enrouler ladite seconde feuille (12) sur ledit premier rouleau (40), ladite seconde feuille (12) transportant avec elle des parties de la couche qui y adhère avec une force d'adhérence supérieure à ladite force d'adhérence uniforme;
à déplacer ladite structure stratifiée composite (10) à travers ladite ligne de pincement et à séparer ladite première feuille (14) de ladite seconde feuille (12) au fur et à mesure que la seconde feuille (12) est enroulée sur ledit premier rouleau (40), ladite première feuille (14) transportant avec elle des parties de la couche qui y adhèrent avec ladite force d'adhérence uniforme;
à faire tourner ledit premier rouleau (40) dans un second sens pour dérouler ladite seconde feuille (12) dudit premier rouleau (40);
à capturer l'extrémité déroulée (18) de ladite seconde feuille (12) dans une ligne de pincement formée par des troisième (58) et quatrième (60) rouleaux disposés de façon sensiblement parallèle auxdits premier (40) et deuxième (42) rouleaux, ledit troisième rouleau (58) étant adapté pour effectuer une rotation lors de la rotation dudit premier rouleau (40) dans ledit second sens, ladite rotation dudit troisième rouleau (58) ayant lieu dans un sens opposé audit second sens; et
à faire passer ladite seconde feuille à travers ladite ligne de pincement entre lesdits troisième (58) et quatrième (60) rouleaux.

12. Procédé selon la revendication 11, dans lequel ladite seconde feuille (12) est plus flexible que ladite première feuille (14).
